# EUROPEAN PATENT APPLICATION

(11) **EP 4 509 731 A1**
(43) Date of publication of application: **19.02.2025**
(21) Application number: 23842160.6
(22) Date of filing: 11.07.2023
(51) Int. Cl.: F16C 11/04

(54) **ROTARY SHAFT ASSEMBLY AND ELECTRONIC APPARATUS**

(30) Priority: 21.07.2022 CN 202221884631 U
(71) Applicant: Huawei Technologies Co., Ltd., Shenzhen, Guangdong 518129 (CN)
(72) Inventor: DONG, Lei, Shenzhen, Guangdong 518129 (CN); WANG, Junping, Shenzhen, Guangdong 518129 (CN); TANG, Huijun, Shenzhen, Guangdong 518129 (CN); HE, Pan, Shenzhen, Guangdong 518129 (CN); ZHANG, Dejun, Shenzhen, Guangdong 518129 (CN)
(74) Representative: Isarpatent
(86) International application number: PCT/CN2023/106810
(87) International publication number: WO 2024/017095

(57) **Abstract**

This application provides a hinge assembly and an electronic device. A first connection portion of the hinge assembly is configured to connect to a first electronic device, a second connection portion of the hinge assembly is configured to connect to a second electronic device, and a rotating shaft portion of the hinge assembly includes a first rotating shaft and a second rotating shaft. The first rotating shaft is connected to the first connection portion through a first lock ear, and the second rotating shaft is connected to the second connection portion through a second lock ear. A first connection line on the first connection portion may be conducted with a second connection line on the second connection portion through the first rotating shaft and the second rotating shaft. According to the hinge assembly and the electronic device provided in this application, on a premise that a wired connection channel is provided for components on two sides of a rotating shaft, stability of structures of the hinge assembly and the electronic device can be improved. This helps prolong a service life of the electronic device, and improve use experience of a user of the electronic device.

## Description

This application claims priority to Chinese Patent Application No. 202221884631.0, filed with the China National Intellectual Property Administration on July 21, 2022 and entitled "HINGE ASSEMBLY AND ELECTRONIC DEVICE", which is incorporated herein by reference in its entirety.

### TECHNICAL FIELD

This application relates to the field of terminal device technologies, and specifically, to a hinge assembly and an electronic device.

### BACKGROUND

A hinge assembly may be widely used in a foldable electronic device like a foldable mobile phone, a foldable notebook computer, or a foldable keyboard. The inside of a foldable keyboard cover may be considered as a hinge assembly. The hinge assembly may be configured to connect to a keyboard and an electronic device. When a wired connection needs to be established between the keyboard and the electronic device, a wired connection line may be disposed inside the hinge assembly, and passes through a rotating shaft of the hinge assembly to reduce redundancy of the line. In this case, the rotating shaft of the hinge assembly needs to maintain stability of an overall structure of the hinge assembly, and needs to maintain connection reliability of the wired connection line.

Therefore, how to maintain stability of a connection between the rotating shaft and another structure and stability of relative motion between a plurality of interconnected structures on a premise of providing the reliable wired connection line is worth considering.

### SUMMARY

This application provides a hinge assembly and an electronic device. A rotating shaft of the hinge assembly is separately connected to mechanical parts on two sides of the rotating shaft, and the hinge assembly may further provide a wired connection path for components on the two sides of the rotating shaft, so that stability of a structure of the hinge assembly is improved.

According to a first aspect, a hinge assembly is provided. The hinge assembly includes: a first connection portion, where the first connection portion is provided with a first connection line, and the first connection line is configured to connect to a first electronic device; a second connection portion, where the second connection portion is provided with a second connection line, and the second connection line is configured to connect to a second electronic device; and a rotating shaft portion, where the rotating shaft portion includes a first cable-through rotating shaft and a second cable-through rotating shaft, a first pin hole is disposed at an end that is of the first cable-through rotating shaft and that is adjacent to the second cable-through rotating shaft, a first shaft pin is disposed at an end that is of the second cable-through rotating shaft and that is adjacent to the first cable-through rotating shaft, and the first shaft pin extends into the first pin hole.

The first connection line is conducted with the second connection line through the first cable-through rotating shaft and the second cable-through rotating shaft. The first cable-through rotating shaft includes a first lock ear, and the first lock ear is connected to the first connection portion. The second cable-through rotating shaft includes a second lock ear, and the second lock ear is connected to the second connection portion.

In a possible implementation, an electrical connection structure is disposed between the first cable-through rotating shaft and the second cable-through rotating shaft, and the electrical connection structure is used to connect the first connection line to the second connection line. For example, a part or all of the first cable-through rotating shaft and the second cable-through rotating shaft may be made of a conductive material, and the conductive material constitutes the electrical connection structure.

In another possible implementation, a cable-through channel may be disposed inside the first cable-through rotating shaft and the second cable-through rotating shaft, and the first connection line and/or the second connection line may pass through the cable-through channel; or a connection line configured to connect the first connection line to the second connection line is disposed inside a cable-through channel, to implement an electrical connection between the first connection line and the second connection line.

In this technical solution, the two cable-through rotating shafts are disposed for conduction between the first connection line and the second connection line, and the lock ear is separately disposed on both the cable-through rotating shafts to be separately connected to connection portions on two sides of the rotating shafts. This helps improve stability of connections between the rotating shafts and the connection portions. The two cable-through rotating shafts are connected through cooperation between the shaft pin and the pin hole. This helps reduce a gap between the rotating shafts, reduce dust, particles, and the like in external space of the rotating shafts entering the rotating shafts, helps reduce wear between the rotating shafts, and helps improve durability of the hinge assembly.

With reference to the first aspect, in some implementations of the first aspect, the first connection portion is provided with a power receiving coil, the power receiving coil is electrically connected to the first connection line, and the power receiving coil is configured to couple to the first electronic device to generate a current; and the second connection portion is provided with a first electrical connection piece, the first electrical connection piece is electrically connected to the second connection line, and the first electrical connection piece is configured to electrically connect to the second electronic device.

In this technical solution, the first connection line is configured to connect to the power receiving coil, and the second connection line is configured to connect to the first connection piece, so that the hinge assembly has a physical circuit condition for supplying power to the second electronic device after the power receiving coil generates power. This helps enrich functions of the hinge assembly, and helps use the hinge assembly in an application scenario related to charging and discharging of the electronic device.

With reference to the first aspect, in some implementations of the first aspect, a first cable-through channel is disposed in the first cable-through rotating shaft, a second cable-through channel is disposed in the second cable-through rotating shaft, and the first cable-through channel is conducted with the second cable-through channel. The first connection line passes through the first cable-through channel and the second cable-through channel, and is conducted with the second connection line; or the second connection line passes through the first cable-through channel and the second cable-through channel, and is conducted with the first connection line; or the first connection line and the second connection line are connected inside the first cable-through channel or the second cable-through channel.

In this technical solution, the cable-through channels are respectively disposed inside the two cable-through rotating shafts, the two cable-through channels communicate with each other, and the connection lines may pass through the disposed cable-through channels, to implement a mutual connection between the two connection lines. The connection lines do not need to be exposed outside the rotating shafts, so that wear or damage of the lines caused by mutual movement between the rotating shafts and another mechanical part can be prevented. This helps improve durability of the hinge assembly, and helps simplify arrangement of internal lines of the hinge assembly.

With reference to the first aspect, in some implementations of the first aspect, a first cable-through port is disposed in a circumferential direction of the first cable-through rotating shaft, the first cable-through port communicates with the first cable-through channel, a second cable-through port is disposed in a circumferential direction of the second cable-through rotating shaft, and the second cable-through port communicates with the second cable-through channel.

In this technical solution, each of inlet and outlet ports through which a line enters a cable-through channel and extends out of the cable-through channel is disposed in an axial direction of a cable-through rotating shaft. Compared with a manner of extending into the cable-through channel from an end portion of a rotating shaft, in this manner, redundancy of lines can be reduced, a length of the line exposed outside the rotating shaft can be reduced, a wired connection line can be protected, and durability of the hinge assembly can be improved.

With reference to the first aspect, in some implementations of the first aspect, the first cable-through port and the first lock ear are located on a same side of the first cable-through rotating shaft, and the second cable-through port and the second lock ear are located on a same side of the second cable-through rotating shaft.

It should be understood that, that the lock ear and the cable-through port are located on the same side of the cable-through rotating shaft herein means that the lock ear and the cable-through port are located on a same side of the axial direction of the cable-through rotating shaft.

In this technical solution, the cable-through port and the lock ear are disposed on the same side of the cable-through rotating shaft, and when adjacent rotating shafts rotate relative to each other, cables extending into or out of the cable-through ports may rotate synchronously with the lock ears, so that redundancy of the cables is reduced.

With reference to the first aspect, in some implementations of the first aspect, a chamfer is disposed in a circumferential direction of the first cable-through port and a circumferential direction of the second cable-through port.

In this technical solution, the chamfer is disposed at the ports at which lines enter and extend out of the cable-through channels. This helps reduce a probability that a line connection is unreliable due to wear near the ports, and helps improve durability of the hinge assembly.

With reference to the first aspect, in some implementations of the first aspect, the first cable-through channel is coaxial with the second cable-through channel.

In this technical solution, the first cable-through channel is coaxial with the second cable-through channel. This helps reduce redundancy of lines inside the cable-through channels, helps reduce a gap between rotating shafts, reduce dust, particles, and the like in external space of the rotating shafts entering the rotating shafts, reduce wear between the rotating shafts, and helps improve durability of the hinge assembly.

With reference to the first aspect, in some implementations of the first aspect, the first cable-through channel is coaxial with the first cable-through rotating shaft, and the second cable-through channel is coaxial with the second cable-through rotating shaft.

When the two adjacent cable-through rotating shafts rotate relative to each other around the axial direction, if the cable-through channels are not coaxial with the rotating shafts, the two cable-through channels in the two cable-through rotating shafts are separated from each other, and lines inside the channels move in the axial direction and the circumferential direction. In this technical solution, the cable-through channels are disposed to be coaxial with the cable-through rotating shafts. This helps reduce wear of lines inside the cable-through channels caused by relative rotation between the cable-through rotating shafts, helps avoid redundancy of the lines inside the cable-through channels, and helps improve durability of the hinge assembly.

With reference to the first aspect, in some implementations of the first aspect, a conductive medium is connected between the first shaft pin and the first pin hole, a third connection line is disposed on a shaft wall of the first cable-through rotating shaft, the third connection line is configured to be conducted between the first connection line and the conductive medium, a fourth connection line is disposed on a shaft wall of the second cable-through rotating shaft, and the fourth connection line is configured to be conducted between the second connection line and the conductive medium.

In this technical solution, the conductive medium is disposed between the shaft pin and the pin hole between the two cable-through rotating shafts that are connected to each other, and conductive lines communicating with the conductive medium are disposed on outer walls of the two cable-through rotating shafts, so that the conductive lines are connected to the lines on the connection portions. This helps avoid disposing channels inside the cable-through rotating shafts, helps reduce complexity of structures of the cable-through rotating shafts, and helps improve assembly efficiency of the hinge assembly.

With reference to the first aspect, in some implementations of the first aspect, the third connection line is plated on the shaft wall of the first cable-through rotating shaft by using a laser direct structuring LDS process, and the fourth connection line is plated on the shaft wall of the second cable-through rotating shaft by using the LDS process.

In this technical solution, the connection lines are plated on the shaft walls of the rotating shafts by using the LDS process. This helps reduce impact of disposing cables on the cable-through rotating shafts, and helps improve connection reliability of wired connection lines of the hinge assembly.

With reference to the first aspect, in some implementations of the first aspect, a first pad is provided on the first lock ear, the third connection line is connected to the first connection line at the first pad, a second pad is provided on the second lock ear, and the fourth connection line is connected to the second connection line at the second pad.

In this technical solution, the pads are disposed on the lock ears of the rotating shafts, and the pads are used to connect the connection lines on the rotating shafts and the connection lines in the connection portions. This helps reduce complexity of line connections, and helps improve reliability of the line connections.

With reference to the first aspect, in some implementations of the first aspect, an axis of the first cable-through rotating shaft is located on a plane on which the first lock ear is located, and an axis of the second cable-through rotating shaft is located on a plane on which the second lock ear is located.

In this technical solution, axes of the cable-through rotating shafts pass through the planes on which the lock ears are located, that is, the lock ears are located on longitudinal sections of the axes of the cable-through rotating shafts, and connections between the two adjacent cable-through rotating shafts and the two connection portions are symmetrical. This helps improve uniformity of forces applied to the connection portions on the two sides of the rotating shafts in a rotation process of the rotating shafts, helps prevent damage to the hinge assembly caused by uneven forces applied to the two connection portions, and helps improve durability of the hinge assembly.

With reference to the first aspect, in some implementations of the first aspect, the rotating shaft portion further includes a support rotating shaft, and an end portion of the support rotating shaft is connected to an end portion of the first cable-through rotating shaft, or an end portion of the support rotating shaft is connected to an end portion of the second cable-through rotating shaft.

Specifically, the end portion of the support rotating shaft may be connected to an end that is of the first cable-through rotating shaft and that is away from the second cable-through rotating shaft, or the end portion of the support rotating shaft may be connected to an end that is of the second cable-through rotating shaft and that is away from the first cable-through rotating shaft.

In this technical solution, the rotating shaft portion of the hinge assembly is further provided with the support rotating shaft, the support rotating shaft is connected to the end portion of the cable-through rotating shaft, different types of rotating shafts may be configured to undertake different types of functions of the rotating shaft portion, and the support rotating shaft may be configured to fill a gap between the first connection portion and the second connection portion. This enhances overall mechanical properties of the rotating shaft portion, and further helps reduce damage caused by a foreign matter to each structure of the hinge assembly from the gap due to existence of the gap.

With reference to the first aspect, in some implementations of the first aspect, a second shaft pin is disposed at the end portion of the support rotating shaft, a second pin hole is disposed at the end that is of the first cable-through rotating shaft and that is away from the second cable-through rotating shaft, and the second shaft pin extends into the second pin hole; or a second pin hole is disposed at the end that is of the second cable-through rotating shaft and that is away from the first cable-through rotating shaft, and the second shaft pin extends into the second pin hole.

With reference to the first aspect, in some implementations of the first aspect, a second pin hole is disposed at the end portion of the support rotating shaft, a second shaft pin is disposed at the end that is of the first cable-through rotating shaft and that is away from the second cable-through rotating shaft, and the second shaft pin extends into the second pin hole; or a second shaft pin is disposed at the end that is of the second cable-through rotating shaft and that is away from the first cable-through rotating shaft, and the second shaft pin extends into the second pin hole.

In this technical solution, the support rotating shaft is connected to the cable-through rotating shaft through cooperation between the shaft pin and the pin hole, so that the cable-through rotating shaft may rotate relative to the support rotating shaft. When a rotation structure between other rotating shafts is damaged, there is a rotating structure that supports relative rotation between the first connection portion and the second connection portion. This helps improve stability of performance of the hinge assembly.

With reference to the first aspect, in some implementations of the first aspect, the support rotating shaft is connected to a third lock ear, and the third lock ear is connected to the first connection portion or the second connection portion.

In this technical solution, in addition to the cable-through rotating shafts, the lock ear may also be disposed on the support rotating shaft, and the lock ear is connected to the first connection portion or the second connection portion. This helps enhance stability of a connection between the rotating shaft portion and each of the first connection portion or the second connection portion.

With reference to the first aspect, in some implementations of the first aspect, there are a plurality of first cable-through rotating shafts, and a quantity of second cable-through rotating shafts is the same as a quantity of first cable-through rotating shafts.

With reference to the first aspect, in some implementations of the first aspect, there are a plurality of support rotating shafts.

In this technical solution, the plurality of cable-through rotating shafts and/or the plurality of support rotating shafts are disposed to share an interaction force for implementing a connection between each rotating shaft and the connection portion. This helps reduce load of each rotating shaft, and helps prolong a service life of the hinge assembly.

With reference to the first aspect, in some implementations of the first aspect, the first cable-through rotating shaft and the second cable-through rotating shaft are made of one or more of the following materials: ferroalloy, zinc alloy, and aluminum alloy.

With reference to the first aspect, in some implementations of the first aspect, the first cable-through rotating shaft and the second cable-through rotating shaft are made of one or more of the following materials: a liquid crystal polymer, polycarbonate, polyamide fiber, and glass fiber.

According to a second aspect, an electronic device is provided. The electronic device includes: a keyboard, where the keyboard is provided with a second electrical connector; and the hinge assembly according to any one of the first aspect and the possible implementations of the first aspect, where the hinge assembly is electrically connected to the keyboard through the second electrical connector.

### BRIEF DESCRIPTION OF DRAWINGS

FIG. 1 shows an application scenario of a hinge assembly according to an embodiment of this application;
FIG. 2 is a diagram of a structure of a hinge assembly according to an embodiment of this application;
FIG. 3 is a diagram of a structure of another hinge assembly according to an embodiment of this application;
FIG. 4 is a diagram of a structure of still another hinge assembly according to an embodiment of this application;
FIG. 5 is a diagram of a structure of yet another hinge assembly according to an embodiment of this application;
FIG. 6 is a diagram of a structure of a rotating shaft portion of a hinge assembly according to an embodiment of this application;
FIG. 7 is a diagram of a structure of another rotating shaft portion of a hinge assembly according to an embodiment of this application;
FIG. 8 is a diagram of a structure of still another rotating shaft portion of a hinge assembly according to an embodiment of this application;
FIG. 9 is a diagram of a structure of still another rotating shaft portion of a hinge assembly according to an embodiment of this application;
FIG. 10 is a diagram of a structure of still another rotating shaft portion of a hinge assembly according to an embodiment of this application;
FIG. 11 is a diagram of a structure of still another rotating shaft portion of a hinge assembly according to an embodiment of this application; and
FIG. 12 is a diagram of a structure of still another rotating shaft portion of a hinge assembly according to an embodiment of this application.

### DESCRIPTION OF EMBODIMENTS

The following describes technical solutions of this application with reference to accompanying drawings.

The following describes embodiments of this application in detail, and examples in embodiments of this application are shown in the accompanying drawings. In the accompanying drawings, same or similar reference numerals indicate same or similar elements or elements having same or similar functions. Embodiments described below with reference to the accompanying drawings are examples, and are merely used to explain this application, but cannot be understood as a limitation on this application.

Unless otherwise defined, a technical term or scientific data used herein shall have a general meaning understood by a person of ordinary skill in the technical field of this application. In descriptions of this application, it should be understood that directions or location relationships indicated by terms such as "center", "longitudinal", "lateral", "up", "down", "front", "back", "left", "right", "vertical", "horizontal", "top", "bottom", "inside", and "outside" are directions or location relationships that are shown based on the accompanying drawings, and are merely intended to facilitate the descriptions of this application and simplify the descriptions, but are not intended to indicate or imply that an indicated apparatus or component needs to have a specific orientation or needs to be constructed and operated in a specific orientation, and therefore cannot be understood as a limitation on this application.

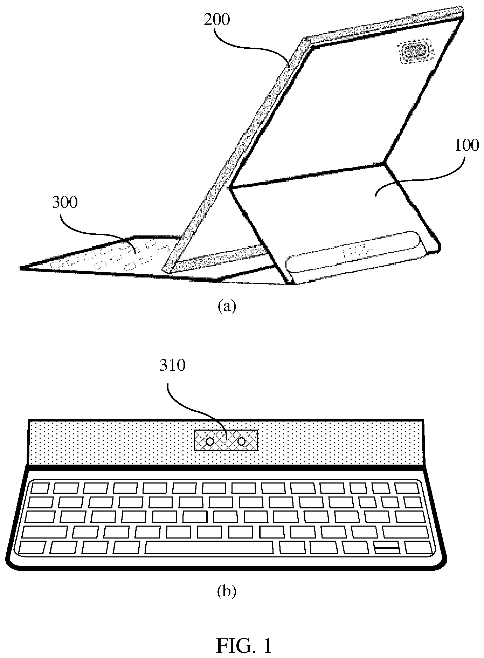

FIG. 1 shows an application scenario of a hinge assembly 100 according to an embodiment of this application. The hinge assembly 100 may be of a foldable plate-shaped structure, and one part of the plate-shaped structure of the hinge assembly 100 is connected to a first electronic device 200 (for example, a tablet computer), the other part of the plate-shaped structure may be connected to a second electronic device 300 (for example, a keyboard), and the two parts of the hinge assembly 100 may be connected by using a rotating shaft, so that the two parts of the hinge assembly 100 may rotate around the rotating shaft within a specific angle range.

The first electronic device 200 may be connected to the hinge assembly 100 through magnetic attraction, bonding, buckling, or the like, to implement relative fastening between the first electronic device 200 and the hinge assembly 100. The second electronic device 300 may be connected to the hinge assembly 100 through magnetic attraction, bonding, buckling, a wired connection, or the like, to implement relative fastening between the second electronic device 300 and the hinge assembly 100.

When the second electronic device 300 is a keyboard, the second electronic device 300 may be connected to the first electronic device 200 through a Bluetooth connection, a wired connection, or the like, so that a user can input data and information to the first electronic device 200 by using the keyboard.

In some embodiments, a wired connection line is provided inside the hinge assembly 100. One end of the line is connected to the first electronic device 200, and the other end of the line is connected to the second electronic device 300. In this way, a wired connection between the first electronic device 200 and the second electronic device 300 may be implemented through the wired connection line.

In some other embodiments, a charging line is provided inside the hinge assembly 100. One end of the charging line is connected to the first electronic device 200, and the other end of the charging line is connected to the second electronic device 300. In this way, a function of supplying power to or receiving power from each other may be implemented between the first electronic device 200 and the second electronic device 300 through the charging line.

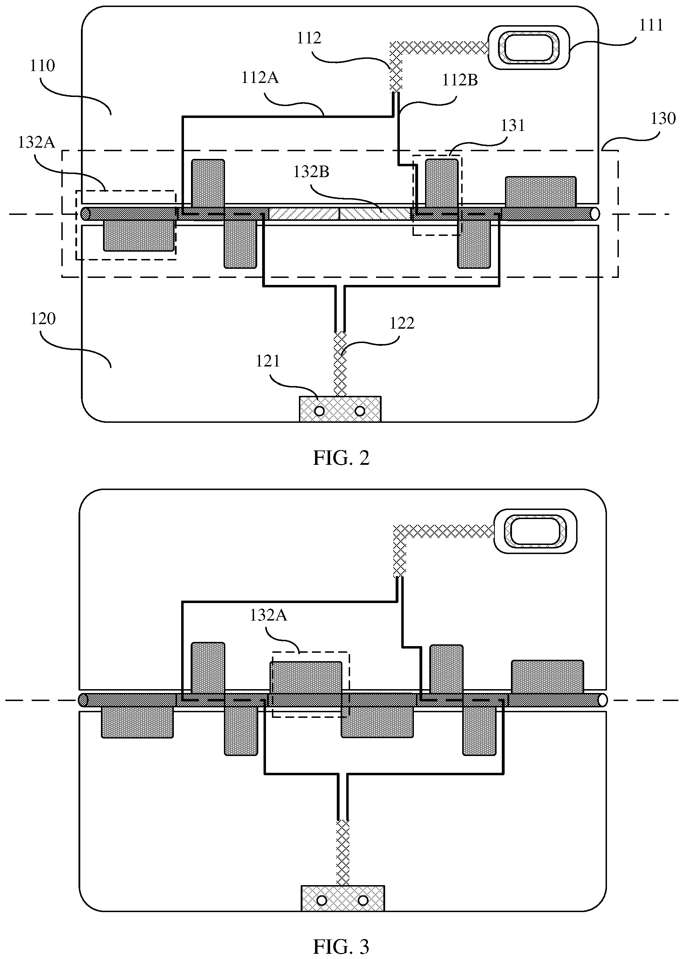

FIG. 2 shows a hinge assembly 100 according to an embodiment of this application. The hinge assembly 100 may include a support portion 110 and a connection portion 120. The support portion 110 may also be referred to as a first connection portion 110, and the connection portion 120 may also be referred to as a second connection portion 120. The hinge assembly 100 may further be provided with a rotating shaft portion 130, and the support portion 110 is connected to the connection portion 120 through the rotating shaft portion 130.

In some embodiments, a protective film (or referred to as a protective layer) may be coated on a surface of the hinge assembly 100. For example, the protective film may be made of a soft material like leather or artificial leather. The protective film can be used to prevent internal components, such as the support portion 110, the connection portion 120, and the rotating shaft portion 130, of the hinge assembly 100 from being exposed, and further protect the hinge assembly 100, so that user experience is improved.

The support portion 110 may be of a thin-board shape. The support portion 110 may be a glass fiber board, a carbon fiber board, a basalt fiber board, an aramid fiber board, or the like. A cable trough may be provided on a surface of a thin board, and the cable trough may be configured to accommodate a cable.

The support portion 110 may be provided with a wireless charging coil 111, and the wireless charging coil 111 may also be referred to as a power receiving coil 111. The wireless charging coil 111 is connected to a first connection line 112, the first connection line 112 may be a flexible printed circuit (flexible printed circuit, FPC), and the first connection line 112 may include one or more branch lines or tributary lines.

The first electronic device 200 may be provided with a wireless charging coil. The wireless charging coil may also be referred to as a power transmitting coil. When the first electronic device 200 is connected (for example, connected through magnetic attraction) to the support portion 110, the power transmitting coil and the power receiving coil 111 are close to each other, and a power supply condition is met (for example, a distance between the power transmitting coil and the power receiving coil 111 is less than a preset value), a current is generated in the power receiving coil 111 through electromagnetic interaction between the power transmitting coil and the power receiving coil 111, and the current may be transmitted, through the first connection line 112, to the other end that is of the first connection line 112 and that is away from the power receiving coil 111.

The connection portion 120 may be of a thin-board shape. The connection portion 120 may be a glass fiber board, a carbon fiber board, a basalt fiber board, an aramid fiber board, or the like. A cable trough may be provided on a surface of a thin board, and the cable trough may be configured to accommodate a cable.

The connection portion 120 may be provided with a first electrical connection piece 121, the first electrical connection piece 121 is connected to a second connection line 122, and the second connection line 122 is conducted with the first connection line 112. When the power receiving coil 111 outputs a current to the first connection line 112, the current may be transmitted to the first electrical connection piece 121 through the first connection line 112 and the second connection line 122. The second connection line 122 may be an FPC, and the second connection line 122 may also include one or more branch lines or tributary lines.

In some embodiments, the first electrical connection piece 121 is a spring-loaded contact (spring-loaded contact), or is referred to as a pogo pin connector, or is referred to as a spring pin. The pogo pin connector may include components such as a needle, a spring, and a needle tube.

The second electronic device 300 may be provided with a second electrical connection piece 310 (refer to (b) in FIG. 1). When an electrical connection or electrical conduction is implemented between the first electrical connection piece 121 and the second electrical connection piece 310, the current generated in the power receiving coil 111 may be input to the second electronic device 300 through the first connection line 112, the second connection line 122, the first electrical connection piece 121, and the second electrical connection piece 310, to supply power to the second electronic device 300.

In some embodiments, the first connection line 112 includes a plurality of tributary lines, and the second connection line 122 also includes a plurality of tributary lines. In this case, the entire first connection line 112 may be connected to the entire second connection line 122, or a part of the first connection line 112 is connected to a part of the second connection line 122.

The rotating shaft portion 130 may be provided with a plurality of types of rotating shafts. The plurality of types of rotating shafts may be cable-through rotating shafts in which a cable-through channel is disposed; or the plurality of types of rotating shafts may be support rotating shafts in which no cable-through channel is disposed; or the plurality of types of rotating shafts may be rotating shafts that are provided with a lock ear (a rotating shaft extension portion) or rotating shafts that are not provided with a lock ear.

A lock ear of a rotating shaft may be considered as a rotating shaft extension portion or a rotating shaft extension arm obtained by extending a shaft wall of the rotating shaft along a direction away from an axis of the rotating shaft. The rotating shaft extension portion and a shaft body may be manufactured in an integrated forming manner. The lock ear may be configured to fasten the support portion 110 and/or the connection portion 120 to the shaft body of the rotating shaft. For the support rotating shaft that is not provided with the lock ear, process complexity of assembly between the rotating shaft portion 130 and the support portion 110 or the connection portion 120 can be reduced to an extent, and production efficiency of the hinge assembly 100 is improved.

In some embodiments, for the rotating shaft that is provided with the lock ear, a reinforcement structure may be disposed at a location at which the lock ear is connected to the shaft wall of the rotating shaft. For example, the reinforcement structure may be of a wedge shape. The reinforcement structure may include a first connection surface and a second connection surface that are adjacent to each other, the first connection surface is connected to the lock ear, and the second connection surface is connected to the shaft wall of the rotating shaft. In other words, the reinforcement structure is disposed near a location at which the lock ear is connected to the rotating shaft (or referred to as a root of the lock ear).

The reinforcement structure is disposed near the location at which the lock ear is connected to the rotating shaft. This helps reduce a case in which the lock ear is separated from the rotating shaft or the lock ear is broken at the root due to stress concentration of the root of the lock ear in a rotation process of the rotating shaft, and helps prolong a service life of the rotating shaft.

A transmission line of the current transmitted by the power receiving coil 111 to the first electrical connection piece 121 may pass through the rotating shaft portion 130. For example, the conductive line may extend into a cable-through rotating shaft of the rotating shaft portion 130 from a side that is of the rotating shaft and that is close to the support portion 110, extends for a specific distance along an axial direction of the rotating shaft, and then extends out of the rotating shaft portion 130 from a side that is of another cable-through rotating shaft and that is close to the connection portion 120. Corresponding conductive lines may be disposed differently based on different structures of the rotating shaft portion 130.

In some embodiments, as shown in FIG. 2, the rotating shaft portion 130 may be provided with a plurality of cable-through rotating shafts 131, and the rotating shaft portion 130 may also be provided with a plurality of support rotating shafts 132. The cable-through rotating shaft 131 may be provided with a lock ear. The support rotating shaft 132 may be provided with a lock ear, namely, 132A, or the support rotating shaft 132 may not be provided with a lock ear, namely, 132B.

Lock ears of two adjacent rotating shafts that each are provided with the lock ear may be respectively connected to the support portion 110 and the connection portion 120, for example, the support rotating shaft 132A and the adjacent cable-through rotating shaft 131 in FIG. 2. The lock ear of the support rotating shaft 132A is connected to the support portion 110, and the lock ear of the adjacent cable-through rotating shaft 131 is connected to the connection portion 120. A rotating structure may be disposed between the support rotating shaft 132A and the adjacent cable-through rotating shaft 131, so that the support rotating shaft 132A and the adjacent cable-through rotating shaft 131 can rotate relative to each other along the axial direction of the rotating shaft, to drive the support portion 110 and/or the connection portion 120 that are/is connected to the rotating shaft to rotate around the axial direction of the rotating shaft.

In some other embodiments, as shown in FIG. 3, the rotating shaft portion 130 may be provided with a plurality of rotating shafts, and the plurality of rotating shafts are all rotating shafts provided with a lock ear. In this way, the plurality of rotating shafts are all fastened to the support portion 110 or the connection portion 120 through the lock ears. This helps improve stability and reliability of a connection between the rotating shaft portion 130 and the support portion 110, and helps improve stability and reliability of a connection between the rotating shaft portion 130 and the connection portion 120.

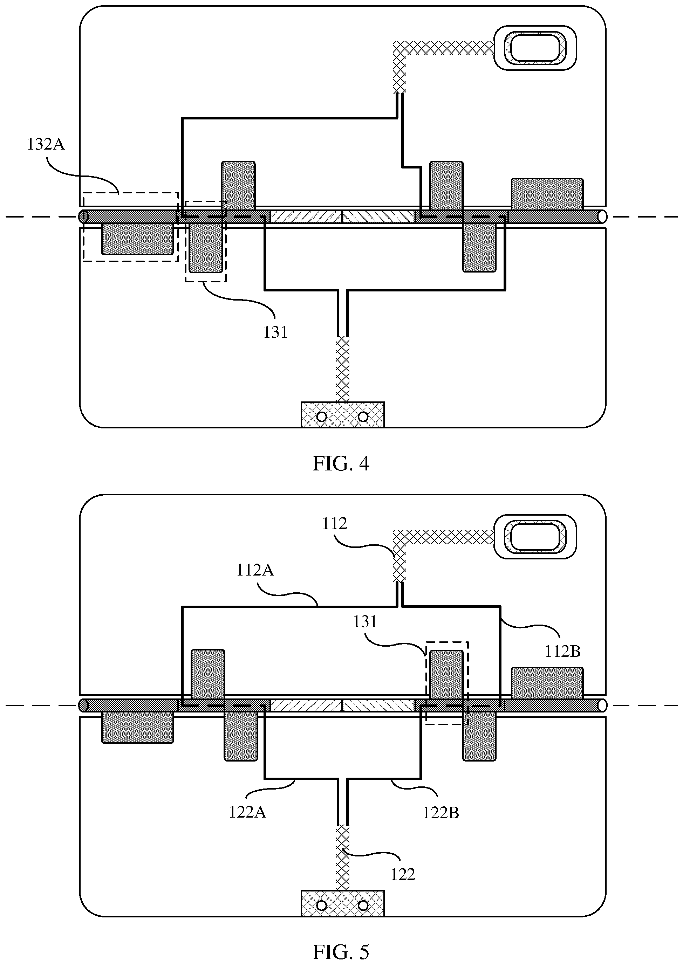

In still some embodiments, as shown in FIG. 4, the support rotating shaft 132A is adjacent to the cable-through rotating shaft 131, and the support rotating shaft 132A and the cable-through rotating shaft 131 each are provided with a lock ear. The lock ear of the support rotating shaft 132A is fastened to the connection portion 120, and the lock ear of the cable-through rotating shaft 131 is fastened to the connection portion 120, that is, the lock ear of the support rotating shaft 132A and the lock ear of the cable-through rotating shaft 131 are connected to a same side. In this case, the support rotating shaft 132A and the cable-through rotating shaft 131 cannot rotate relative to each other, and further, no rotation structure may be disposed between the support rotating shaft 132A and the cable-through rotating shaft 131. In an embodiment, the support rotating shaft 132A and the cable-through rotating shaft 131 may be two parts of one rotating shaft. For example, the two parts may be referred to as a first part and a second part. No cable-through channel is disposed inside the first part, and a cable-through channel is disposed inside the second part.

With reference to FIG. 2 and FIG. 5, the first connection line 112 may include a first branch line 112A and a second branch line 112B, and a cable inlet port or a cable outlet port may be disposed on the cable-through rotating shaft 131. For example, as shown in FIG. 2, a port disposed on the cable-through rotating shaft 131 faces the support portion 110, and the port may be used as a cable inlet of the second branch line 112B. As shown in FIG. 5, a port disposed on the cable-through rotating shaft 131 faces the connection portion 120, and the port may be used as a cable outlet of the second branch line 112B.

In some embodiments, a part of the first connection line 112 or the entire first connection line 112 may extend into a same cable-through rotating shaft 131 and extend out of another cable-through rotating shaft 131. Alternatively, a part of the second connection line 122 or the entire second connection line 122 may extend into a same cable-through rotating shaft 131 and extend out of another cable-through rotating shaft 131. Alternatively, a part of the first connection line 112 or the entire first connection line 112 may extend into a same cable-through rotating shaft 131, and is connected to a part of the second connection line 122 or the entire second connection line 122 inside the cable-through rotating shaft 131.

For example, as shown in FIG. 5, the first connection line 112 may include the first branch line 112A and the second branch line 112B, and the second connection line 122 may include a third branch line 122A and a fourth branch line 122B. The second branch line 112B may extend into an adjacent cable-through rotating shaft on the right side of the cable-through rotating shaft 131, and then extend out of the cable-through rotating shaft 131, so that the second branch line 112B and the fourth branch line 122B are connected to the connection portion 120.

In some embodiments, both a cable inlet port and a cable outlet port may be disposed on a same cable-through rotating shaft, so that when a plurality of lines need to pass through the rotating shaft portion 130, the plurality of lines may share the same cable-through rotating shaft.

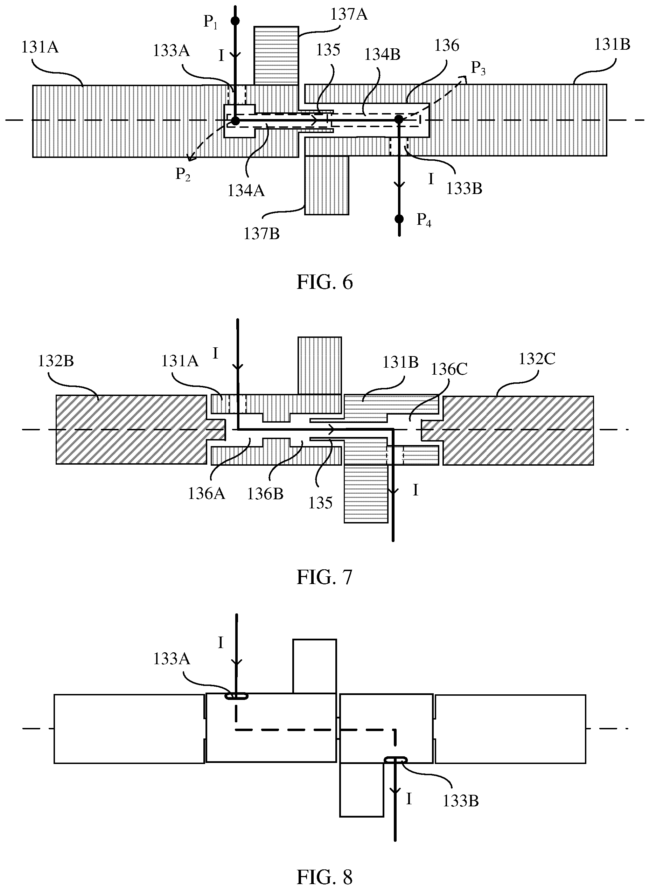

With reference to FIG. 6 to FIG. 12, the following describes a detailed structure of the cable-through rotating shaft, a detailed structure of the support rotating shaft, a connection manner between rotating shafts, and the like. It should be noted that, in the following embodiments, the support rotating shaft is described mainly by using the support rotating shaft 132B as an example, and the support rotating shaft 132A is also applicable.

FIG. 6 is a diagram of a structure of a rotating shaft portion 130 according to an embodiment of this application.

A cable-through port 133A is disposed on an axis wall of a cable-through rotating shaft 131A. The cable-through port 133A may be a circular port, a rectangular port, or the like. The cable-through port 133A extends from the axis wall of the cable-through rotating shaft 131A to a direction of an axis of the cable-through rotating shaft 131A, and communicates with a cable-through channel 134A inside the cable-through rotating shaft 131A. An axis of a through hole formed by extending the cable-through port 133A may be coplanar with a plane on which the axis of the cable-through rotating shaft 131A is located.

In some embodiments, the cable-through port may be a strip opening, the strip opening may extend along an axial direction of the rotating shaft, and the first connection line and/or the second connection line may extend into and/or extend out of the strip opening. A chamfer may be disposed at a joint between a length direction and a width direction of the strip opening, in other words, a chamfer may be disposed in an axial direction of the port.

In an embodiment, a protective layer made of a soft material is further disposed on an outer edge of the strip opening, and the protective layer can prevent wear of a cable near the opening by the edge of the strip opening.

The cable-through channel 134A is disposed inside the cable-through rotating shaft 131A, and an extension direction of the cable-through channel 134A may be parallel to the axis of the cable-through rotating shaft 131A. In an embodiment, an axis of the cable-through channel 134A coincides with the axis of the cable-through rotating shaft 131A, in other words, the cable-through channel 134A is coaxial with the cable-through rotating shaft 131A.

A columnar protrusion 135 may be disposed at one end of the cable-through rotating shaft 131A. The columnar protrusion 135 may also be referred to as a shaft pin 135, and a diameter of the shaft pin 135 is less than a diameter of the cable-through rotating shaft 131A. An extension direction of the shaft pin 135 is consistent with the extension direction of the cable-through channel 134A. The cable-through channel 134A may penetrate from an end that is of the shaft pin 135 and that is close to the cable-through rotating shaft 131A to an end that is of the shaft pin 135 and that is away from the cable-through rotating shaft 131A. A diameter of the cable-through channel 134A is less than the diameter of the shaft pin 135. In other words, a through hole is disposed in an axial direction of the shaft pin 135, and the through hole communicates with the cable-through channel 134A.

The cable-through rotating shaft 131A may include one or more lock ears 137A, and locations at which the one or more lock ears 137A are disposed may avoid the cable-through port 133A. In some embodiments, a plane on which the lock ear 137A is located is coplanar with the plane on which the axis of the cable-through rotating shaft 131A is located, and is further coplanar with the axis of the through hole formed by extending the cable-through port 133A.

A cable-through port 133B is disposed on an axis wall of a cable-through rotating shaft 131B. The cable-through port 133B may be a circular port, a rectangular port, or the like. The cable-through port 133B extends from the axis wall of the cable-through rotating shaft 131B to a direction of an axis of the cable-through rotating shaft 131B, and communicates with a cable-through channel 134B inside the cable-through rotating shaft 131B. An axis of a through hole formed by extending the cable-through port 133B may be coplanar with a plane on which the axis of the cable-through rotating shaft 131B is located.

In some embodiments, the cable-through port on a same cable-through rotating shaft and the lock ear on the cable-through rotating shaft may be located on a same side, or the cable-through port on a same cable-through rotating shaft and the lock ear on the cable-through rotating shaft may be respectively located on two sides of the cable-through rotating shaft. It should be understood that, that the lock ear and the cable-through port are located on the same side of the cable-through rotating shaft herein means that the lock ear and the cable-through port are located on a same side of an axial direction of the cable-through rotating shaft.

The cable-through port and the lock ear are disposed on the same side of the cable-through rotating shaft, and when adjacent rotating shafts rotate relative to each other, cables extending into or out of the cable-through ports may rotate synchronously with the lock ears, so that redundancy of the cables is reduced.

The cable-through channel 134B is disposed inside the cable-through rotating shaft 131B, and an extension direction of the cable-through channel 134B may be parallel to the axis of the cable-through rotating shaft 131B. In an embodiment, an axis of the cable-through channel 134B coincides with the axis of the cable-through rotating shaft 131B, in other words, the cable-through channel 134B is coaxial with the cable-through rotating shaft 131B.

A groove 136 may be disposed at one end of the cable-through rotating shaft 131B. The groove 136 may also be referred to as a pin hole 136, and a diameter of the pin hole 136 is less than a diameter of the cable-through rotating shaft 131B. An extension direction of the pin hole 136 is consistent with the extension direction of the cable-through channel 134B. A diameter of the cable-through channel 134B may be less than, greater than, or equal to the diameter of the pin hole 136.

The cable-through rotating shaft 131B may include one or more lock ears 137B, and locations at which the one or more lock ears 137B are disposed may avoid the cable-through port 133B. In some embodiments, a plane on which the lock ear 137B is located is coplanar with the plane on which the axis of the cable-through rotating shaft 131B is located, and is further coplanar with the axis of the through hole formed by extending the cable-through port 133B.

The diameter of the shaft pin 135 of the cable-through rotating shaft 131A is less than the diameter of the pin hole 136 of the cable-through rotating shaft 131B, and the shaft pin 135 may extend into the pin hole 136, so that the cable-through channel 134A may communicate with the cable-through channel 134B. Further, the cable may extend into the cable-through channel 134A from the cable-through port 133A, then enter the cable-through channel 134B, and further extend out of the cable-through port 133B. The cable-through channel 134A may be coaxial with the cable-through channel 134B. The shaft pin 135 may also be coaxial with the pin hole 136.

In some embodiments, when the shaft pin 135 extends into the pin hole 136, a gap is disposed between an outer wall of the shaft pin 135 and a hole wall of the pin hole 136, that is, the outer wall of the shaft pin 135 does not press against the hole wall of the pin hole 136. In an embodiment, a difference between the diameter of the pin hole 136 and the diameter of the shaft pin 135 ranges from 0.05 mm to 0.25 mm.

The gap is disposed between the shaft pin and the pin hole. This helps prevent an excessively large friction force between the shaft pin and the pin hole from affecting a rotation effect in a process of mutual rotation between adjacent rotating shafts, also helps reduce structural wear caused by relative rotation between the shaft pin and the pin hole, and helps prolong a service life of the rotating shaft.

In some embodiments, when the shaft pin 135 extends into the pin hole 136, a gap is disposed between an end portion that is of the cable-through rotating shaft 131A and that is close to one end of the shaft pin 135 and an end portion that is of the cable-through rotating shaft 131B and that is close to one end of the pin hole 136, that is, adjacent end faces of the two cable-through rotating shafts connected to each other do not press against each other. In an embodiment, a gap is disposed between adjacent end faces of two cable-through rotating shafts connected to each other, and the gap ranges from 0.05 mm to 0.25 mm.

The gap is disposed between the adjacent end faces of the two cable-through rotating shafts connected to each other. This helps reduce wear caused by mutual contact between the end faces in a process of relative rotation between the cable-through rotating shafts, and helps prolong a service life of the rotating shaft.

The shaft pin 135 extending into the pin hole 136 may rotate relative to the pin hole 136, so that the cable-through rotating shaft 131A may rotate relative to the cable-through rotating shaft 131B.

In an embodiment, in a process in which the cable-through rotating shaft 131A rotates relative to the cable-through rotating shaft 131B, a cable segment P1P2 extending into the cable-through rotating shaft 131A rotates around only a point P2, and a cable segment P3P4 extending out of the cable-through rotating shaft 131B rotates around only a point P3. The point P2 and the point P3 are respectively located on the axis of the cable-through rotating shaft 131A and the axis of the cable-through rotating shaft 131B. In this case, when the support portion 110 and/or the connection portion 120 rotate/rotates around the rotating shaft portion 130, rotation axes/a rotation axis of the support portion 110 and/or the connection portion 120 pass/passes through a rotation center of the cable, so that redundancy of the cable can be reduced to an extent.

In this embodiment of this application, the cable-through rotating shaft 131A and the cable-through rotating shaft 131B may be made of one or more of the following materials: ferroalloy (for example, stainless steel), zinc alloy, aluminum alloy, or the like.

FIG. 7 is a diagram of a structure of another rotating shaft portion 130 according to an embodiment of this application.

The rotating shaft portion 130 is provided with a support rotating shaft 132B, a support rotating shaft 132C, a cable-through rotating shaft 131A, and a cable-through rotating shaft 131B. The cable-through rotating shaft 131A and the cable-through rotating shaft 131B each are provided with a cable-through port, a cable-through channel, and a lock ear. A disposition manner of each of the cable-through port, the cable-through channel, and the lock ear is similar to a disposition manner in the embodiment shown in FIG. 6. For details, refer to corresponding descriptions in FIG. 6. For brevity, details are not described herein again. The following mainly describes a connection manner between rotating shafts in this embodiment.

A pin hole 136 is separately disposed at two ends of the cable-through rotating shaft 131A, and pin holes at the two ends communicate with each other inside the cable-through rotating shaft 131A. A pin hole 136A cooperates with a shaft pin disposed at one end of the support rotating shaft 132B, and the shaft pin may extend into the pin hole 136A, so that the support rotating shaft 132B may rotate relative to the cable-through rotating shaft 131A. A pin hole 136B cooperates with a shaft pin 135 disposed at one end of the cable-through rotating shaft 131B, and the shaft pin 135 may extend into the pin hole 136B, so that the cable-through rotating shaft 131B may rotate relative to the cable-through rotating shaft 131A.

The shaft pin 135 is disposed at the one end of the cable-through rotating shaft 131B, and the shaft pin 135 may extend into the pin hole 136B, so that the cable-through rotating shaft 131B may rotate relative to the cable-through rotating shaft 131A. A pin hole 136C is disposed at the other end of the cable-through rotating shaft 131B, the pin hole 136C may cooperate with a shaft pin disposed at one end of the support rotating shaft 132C, and the shaft pin may extend into the pin hole 136C, so that the support rotating shaft 132C may rotate relative to the cable-through rotating shaft 131B.

In some embodiments, when the shaft pin 135 extends into the pin hole 136B, a gap is disposed between an outer wall of the shaft pin 135 and a hole wall of the pin hole 136B, that is, the outer wall of the shaft pin 135 does not press against the hole wall of the pin hole 136B. In an embodiment, a difference between a diameter of the pin hole 136B and a diameter of the shaft pin 135 ranges from 0.05 mm to 0.25 mm.

When the shaft pin of the support rotating shaft extends into the pin hole of the cable-through rotating shaft, or when the pin hole of the support rotating shaft accommodates the shaft pin of the cable-through rotating shaft, the gap is disposed between the shaft pin and the pin hole in pair that cooperate with each other, that is, the outer wall of the shaft pin does not press against the hole wall of the pin hole. In an embodiment, a difference between a diameter of the pin hole and a diameter of the shaft pin ranges from 0.05 mm to 0.25 mm.

The gap is disposed between the shaft pin and the pin hole. This helps prevent an excessively large friction force between the shaft pin and the pin hole from affecting a rotation effect in a process of mutual rotation between adjacent rotating shafts, also helps reduce structural wear caused by relative rotation between the shaft pin and the pin hole, and helps prolong a service life of the rotating shaft.

In some embodiments, when a shaft pin of two adjacent rotating shafts extends into a pin hole, a gap is disposed between an end portion that is of the rotating shaft and that is close to one end of the shaft pin and an end portion that is of the rotating shaft and that is close to one end of the pin hole, that is, adjacent end faces of the two rotating shafts connected to each other do not press against each other. In an embodiment, the gap is disposed between the adjacent end faces of the two rotating shafts connected to each other, and the gap ranges from 0.05 mm to 0.25 mm.

The gap is disposed between the adjacent end faces of the two rotating shafts connected to each other. This helps reduce wear caused by mutual contact between the end faces in a process of relative rotation between the rotating shafts, and helps prolong a service life of the rotating shaft. In this embodiment of this application, the cable-through rotating shaft and the support rotating shaft may be made of one or more of the following materials: ferroalloy (for example, stainless steel), zinc alloy, aluminum alloy, or the like.

As shown in FIG. 8, when the support rotating shaft 132B, the cable-through rotating shaft 131A, and the cable-through rotating shaft 131B are connected through mutual cooperation between the shaft pins and the pin holes, the gaps between adjacent rotating shafts may be ignored. This helps reduce adverse impact of the gaps between the rotating shafts on a keyboard protective film, and prolong a service life of the hinge assembly 100.

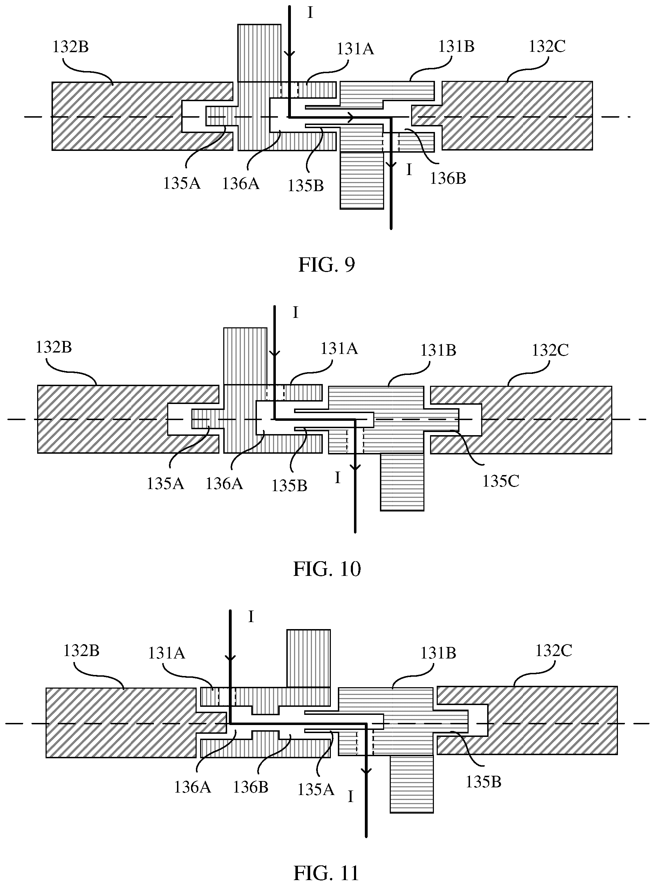

FIG. 9 is a diagram of a structure of still another rotating shaft portion 130 according to an embodiment of this application.

The rotating shaft portion 130 is provided with a support rotating shaft 132B, a support rotating shaft 132C, a cable-through rotating shaft 131A, and a cable-through rotating shaft 131B. The cable-through rotating shaft 131A and the cable-through rotating shaft 131B each are provided with a cable-through port, a cable-through channel, and a lock ear. A disposition manner of each of the cable-through port, the cable-through channel, and the lock ear is similar to a disposition manner in the embodiment shown in FIG. 6. For details, refer to corresponding descriptions in FIG. 6. For brevity, details are not described herein again. The following mainly describes a connection manner between rotating shafts in this embodiment.

A shaft pin 135A is disposed at one end of the cable-through rotating shaft 131A, the shaft pin 135A may cooperate with a pin hole disposed at one end of the support rotating shaft 132B, and the shaft pin 135A may extend into the pin hole, so that the support rotating shaft 132B may rotate relative to the cable-through rotating shaft 131A. A pin hole 136A is disposed at the other end of the cable-through rotating shaft 131A, the pin hole 136A may cooperate with a shaft pin 135B disposed at one end of the cable-through rotating shaft 131B, and the pin hole 136A may be configured to accommodate the shaft pin 135B, so that the cable-through rotating shaft 131A may rotate relative to the cable-through rotating shaft 131B.

The shaft pin 135B is disposed at one end of the cable-through rotating shaft 131B, the shaft pin 135B may cooperate with the pin hole 136A disposed at one end of the cable-through rotating shaft 131A, and the shaft pin 135B may extend into the pin hole 136A, so that the cable-through rotating shaft 131A may rotate relative to the cable-through rotating shaft 131B. A pin hole 136B is disposed at the other end of the cable-through rotating shaft 131B, the pin hole 136B may cooperate with a shaft pin disposed at one end of the support rotating shaft 132C, and the pin hole 136B may be configured to accommodate the shaft pin of the support rotating shaft, so that the cable-through rotating shaft 131B may rotate relative to the support rotating shaft 132C.

In some embodiments, when the shaft pin 135B extends into the pin hole 136A, a gap is disposed between an outer wall of the shaft pin 135B and a hole wall of the pin hole 136A, that is, the outer wall of the shaft pin 135B does not press against the hole wall of the pin hole 136A. In an embodiment, a difference between a diameter of the pin hole 136A and a diameter of the shaft pin 135B ranges from 0.05 mm to 0.25 mm.

When the shaft pin of the support rotating shaft extends into the pin hole of the cable-through rotating shaft, or when the pin hole of the support rotating shaft accommodates the shaft pin of the cable-through rotating shaft, the gap is disposed between the shaft pin and the pin hole in pair that cooperate with each other, that is, the outer wall of the shaft pin does not press against the hole wall of the pin hole. In an embodiment, a difference between a diameter of the pin hole and a diameter of the shaft pin ranges from 0.05 mm to 0.25 mm.

The gap is disposed between the shaft pin and the pin hole. This helps prevent an excessively large friction force between the shaft pin and the pin hole from affecting a rotation effect in a process of mutual rotation between adjacent rotating shafts, also helps reduce structural wear caused by relative rotation between the shaft pin and the pin hole, and helps prolong a service life of the rotating shaft.

In some embodiments, when a shaft pin of two adjacent rotating shafts extends into a pin hole, a gap is disposed between an end portion that is of the rotating shaft and that is close to one end of the shaft pin and an end portion that is of the rotating shaft and that is close to one end of the pin hole, that is, adjacent end faces of the two rotating shafts connected to each other do not press against each other. In an embodiment, the gap is disposed between the adjacent end faces of the two rotating shafts connected to each other, and the gap ranges from 0.05 mm to 0.25 mm.

The gap is disposed between the adjacent end faces of the two rotating shafts connected to each other. This helps reduce wear caused by mutual contact between the end faces in a process of relative rotation between the rotating shafts, and helps prolong a service life of the rotating shaft.

In this embodiment of this application, the cable-through rotating shaft and the support rotating shaft may be made of one or more of the following materials: ferroalloy (for example, stainless steel), zinc alloy, aluminum alloy, or the like.

FIG. 10 is a diagram of a structure of still another rotating shaft portion 130 according to an embodiment of this application.

The rotating shaft portion 130 is provided with a support rotating shaft 132B, a support rotating shaft 132C, a cable-through rotating shaft 131A, and a cable-through rotating shaft 131B. The cable-through rotating shaft 131A and the cable-through rotating shaft 131B each are provided with a cable-through port, a cable-through channel, and a lock ear. A disposition manner of each of the cable-through port, the cable-through channel, and the lock ear is similar to a disposition manner in the embodiment shown in FIG. 6. For details, refer to corresponding descriptions in FIG. 6. For brevity, details are not described herein again. The following mainly describes a connection manner between rotating shafts in this embodiment.

A shaft pin 135A is disposed at one end of the cable-through rotating shaft 131A, the shaft pin 135A may cooperate with a pin hole disposed at one end of the support rotating shaft 132B, and the shaft pin 135A may extend into the pin hole, so that the support rotating shaft 132B may rotate relative to the cable-through rotating shaft 131A. A pin hole 136A is disposed at the other end of the cable-through rotating shaft 131A, the pin hole 136A may cooperate with a shaft pin 135B disposed at one end of the cable-through rotating shaft 131B, and the pin hole 136A may be configured to accommodate the shaft pin 135B, so that the cable-through rotating shaft 131A may rotate relative to the cable-through rotating shaft 131B.

The shaft pin 135B is disposed at the one end of the cable-through rotating shaft 131B, the shaft pin 135B may cooperate with the pin hole 136A disposed at the one end of the cable-through rotating shaft 131A, and the shaft pin 135B may extend into the pin hole 136A, so that the cable-through rotating shaft 131A may rotate relative to the cable-through rotating shaft 131B. A shaft pin 135C is also disposed at the other end of the cable-through rotating shaft 131B, the shaft pin 135C cooperates with a pin hole disposed at one end of the support rotating shaft 132C, and the shaft pin 135C may extend into the pin hole, so that the cable-through rotating shaft 131B may rotate relative to the support rotating shaft 132C.

In some embodiments, when the shaft pin 135B extends into the pin hole 136A, a gap is disposed between an outer wall of the shaft pin 135B and a hole wall of the pin hole 136A, that is, the outer wall of the shaft pin 135B does not press against the hole wall of the pin hole 136A. In an embodiment, a difference between a diameter of the pin hole 136A and a diameter of the shaft pin 135B ranges from 0.05 mm to 0.25 mm.

When the shaft pin of the support rotating shaft extends into the pin hole of the cable-through rotating shaft, or when the pin hole of the support rotating shaft accommodates the shaft pin of the cable-through rotating shaft, the gap is disposed between the shaft pin and the pin hole in pair that cooperate with each other, that is, the outer wall of the shaft pin does not press against the hole wall of the pin hole. In an embodiment, a difference between a diameter of the pin hole and a diameter of the shaft pin ranges from 0.05 mm to 0.25 mm.

The gap is disposed between the shaft pin and the pin hole. This helps prevent an excessively large friction force between the shaft pin and the pin hole from affecting a rotation effect in a process of mutual rotation between adjacent rotating shafts, also helps reduce structural wear caused by relative rotation between the shaft pin and the pin hole, and helps prolong a service life of the rotating shaft.

In some embodiments, when a shaft pin of two adjacent rotating shafts extends into a pin hole, a gap is disposed between an end portion that is of the rotating shaft and that is close to one end of the shaft pin and an end portion that is of the rotating shaft and that is close to one end of the pin hole, that is, adjacent end faces of the two rotating shafts connected to each other do not press against each other. In an embodiment, the gap is disposed between the adjacent end faces of the two rotating shafts connected to each other, and the gap ranges from 0.05 mm to 0.25 mm.

The gap is disposed between the adjacent end faces of the two rotating shafts connected to each other. This helps reduce wear caused by mutual contact between the end faces in a process of relative rotation between the rotating shafts, and helps prolong a service life of the rotating shaft.

In this embodiment of this application, the cable-through rotating shaft and the support rotating shaft may be made of one or more of the following materials: ferroalloy (for example, stainless steel), zinc alloy, aluminum alloy, or the like.

FIG. 11 is a diagram of a structure of still another rotating shaft portion 130 according to an embodiment of this application.

The rotating shaft portion 130 is provided with a support rotating shaft 132B, a support rotating shaft 132C, a cable-through rotating shaft 131A, and a cable-through rotating shaft 131B. The cable-through rotating shaft 131A and the cable-through rotating shaft 131B each are provided with a cable-through port, a cable-through channel, and a lock ear. A disposition manner of each of the cable-through port, the cable-through channel, and the lock ear is similar to a disposition manner in the embodiment shown in FIG. 6. For details, refer to corresponding descriptions in FIG. 6. For brevity, details are not described herein again. The following mainly describes a connection manner between rotating shafts in this embodiment.

A pin hole is separately disposed at two ends of the cable-through rotating shaft 131A, and pin holes at the two ends communicate with each other inside the cable-through rotating shaft 131A. A pin hole 136A cooperates with a shaft pin disposed at one end of the support rotating shaft 132B, and the shaft pin may extend into the pin hole 136A, so that the support rotating shaft 132B may rotate relative to the cable-through rotating shaft 131A. A pin hole 136B cooperates with a shaft pin 135 disposed at one end of the cable-through rotating shaft 131B, and the shaft pin 135 may extend into the pin hole 136B, so that the cable-through rotating shaft 131B may rotate relative to the cable-through rotating shaft 131A.

A shaft pin 135B is disposed at the one end of the cable-through rotating shaft 131B, the shaft pin 135B may cooperate with the pin hole 136A disposed at the one end of the cable-through rotating shaft 131A, and the shaft pin 135B may extend into the pin hole 136A, so that the cable-through rotating shaft 131A may rotate relative to the cable-through rotating shaft 131B. A shaft pin 135C is also disposed at the other end of the cable-through rotating shaft 131B, the shaft pin 135C cooperates with a pin hole disposed at one end of the support rotating shaft 132B, and the shaft pin 135C may extend into the pin hole, so that the cable-through rotating shaft 131B may rotate relative to the support rotating shaft 132B.

In some embodiments, when the shaft pin 135 extends into the pin hole 136B, a gap is disposed between an outer wall of the shaft pin 135 and a hole wall of the pin hole 136B, that is, the outer wall of the shaft pin 135 does not press against the hole wall of the pin hole 136B. In an embodiment, a difference between a diameter of the pin hole 136B and a diameter of the shaft pin 135 ranges from 0.05 mm to 0.25 mm.

When the shaft pin of the support rotating shaft extends into the pin hole of the cable-through rotating shaft, or when the pin hole of the support rotating shaft accommodates the shaft pin of the cable-through rotating shaft, the gap is disposed between the shaft pin and the pin hole in pair that cooperate with each other, that is, the outer wall of the shaft pin does not press against the hole wall of the pin hole. In an embodiment, a difference between a diameter of the pin hole and a diameter of the shaft pin ranges from 0.05 mm to 0.25 mm.

The gap is disposed between the shaft pin and the pin hole. This helps prevent an excessively large friction force between the shaft pin and the pin hole from affecting a rotation effect in a process of mutual rotation between adjacent rotating shafts, also helps reduce structural wear caused by relative rotation between the shaft pin and the pin hole, and helps prolong a service life of the rotating shaft.

In some embodiments, when a shaft pin of two adjacent rotating shafts extends into a pin hole, a gap is disposed between an end portion that is of the rotating shaft and that is close to one end of the shaft pin and an end portion that is of the rotating shaft and that is close to one end of the pin hole, that is, adjacent end faces of the two rotating shafts connected to each other do not press against each other. In an embodiment, the gap is disposed between the adjacent end faces of the two rotating shafts connected to each other, and the gap ranges from 0.05 mm to 0.25 mm.

The gap is disposed between the adjacent end faces of the two rotating shafts connected to each other. This helps reduce wear caused by mutual contact between the end faces in a process of relative rotation between the rotating shafts, and helps prolong a service life of the rotating shaft.

In this embodiment of this application, the cable-through rotating shaft and the support rotating shaft may be made of one or more of the following materials: ferroalloy (for example, stainless steel), zinc alloy, aluminum alloy, or the like.

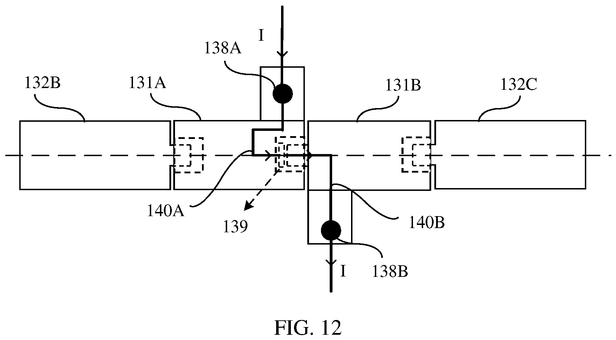

FIG. 12 is a diagram of a structure of still another rotating shaft portion 130 according to an embodiment of this application.

A difference from the foregoing embodiments lies in that no cable-through channel may be disposed inside a cable-through rotating shaft in this embodiment of this application. Any connection manner between adjacent rotating shafts in the foregoing embodiments is applicable to this embodiment of this application. FIG. 12 shows only one connection manner as an example. For brevity, other connection manners are not described herein again. For detailed content, refer to descriptions in the foregoing related embodiments.

The rotating shaft portion 130 is provided with a support rotating shaft 132B, a cable-through rotating shaft 131A, and a cable-through rotating shaft 131B. The support rotating shaft 132B may be connected to the cable-through rotating shaft 131A through cooperation between a shaft pin and a pin hole, the support rotating shaft 132B may be connected to the cable-through rotating shaft 131B through cooperation between a shaft pin and a pin hole, and the cable-through rotating shaft 131A may also be connected to the cable-through rotating shaft 131B through cooperation between a shaft pin and a pin hole.

A pin hole 136 is disposed at an end that is of the cable-through rotating shaft 131A and that is adjacent to the cable-through rotating shaft 131B, and a shaft pin 135 is disposed at an end that is of the corresponding cable-through rotating shaft 131B and that is adjacent to the cable-through rotating shaft 131A. The shaft pin 135 may extend into the pin hole 136, and an electrical connection may be disposed between the shaft pin 135 and the pin hole 136. For example, a conductive medium 139 (for example, graphite) may be filled between an end portion of the shaft pin 135 and an inner wall of the pin hole 136, to implement an electrical connection between the cable-through rotating shaft 131A and the cable-through rotating shaft 131B.

In some embodiments, an electrical connection point 138A may be disposed on a lock ear of the cable-through rotating shaft 131A, and the electrical connection point 138A may be a pad. An electrical connection point 138B may be disposed on a lock ear of the cable-through rotating shaft 131B, and the electrical connection point 138B may also be a pad.

In some embodiments, a third connection line 140A is disposed between the electrical connection point 138A and the conductive medium 139. For example, a conductive line may be plated on a surface of the cable-through rotating shaft 131A, and the third connection line 140A is configured to connect the conductive medium 139 to the electrical connection point 138A. A fourth connection line 140B is disposed between the electrical connection point 138B and the conductive medium 139. For example, a conductive line may be plated on a surface of the cable-through rotating shaft 131B, and the fourth connection line 140B is configured to connect the conductive medium 139 to the electrical connection point 138B.

In some embodiments, one end of the electrical connection point 138A is connected to the first connection line 112, and the other end of the electrical connection point 138A is connected to the third connection line 140A. One end of the electrical connection point 138B is connected to the second connection line 122, and the other end of the electrical connection point 138B is connected to the fourth connection line 140B.

In some other embodiments, electrical connection points 138A and 138B may not be disposed on the lock ears, the first connection line 112 and the third connection line 140A constitute one line, and the second connection line 122 and the fourth connection line 140B constitute one line.

In this embodiment of this application, the cable-through rotating shaft 131A and the cable-through rotating shaft 131B may be made of one or more of the following materials: a liquid crystal polymer (liquid crystal polymer, LCP), polycarbonate (polycarbonate, PC), polyamide (polyamide, PA) fiber, glass fiber (glass fiber, GF), or the like.

In some embodiments, the conductive line may be plated on the surface of the cable-through rotating shaft by using a laser circuit board (laser direct structuring, LDS), and the conductive line is configured to connect the conductive medium 139 to the electrical connection point 138B.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variants thereof all mean "include but are not limited to", unless otherwise specifically emphasized in another manner.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A hinge assembly (100), comprising:
a first connection portion (110), wherein the first connection portion (110) is provided with a first connection line (112), and the first connection line (112) is configured to connect to a first electronic device;
a second connection portion (120), wherein the second connection portion (120) is provided with a second connection line (122), and the second connection line (122) is configured to connect to a second electronic device; and
a rotating shaft portion (130), wherein the rotating shaft portion (130) comprises a first cable-through rotating shaft and a second cable-through rotating shaft, a first pin hole is disposed at an end that is of the first cable-through rotating shaft and that is adjacent to the second cable-through rotating shaft, a first shaft pin is disposed at an end that is of the second cable-through rotating shaft and that is adjacent to the first cable-through rotating shaft, and the first shaft pin extends into the first pin hole, wherein
the first connection line (112) is conducted with the second connection line (122) through the first cable-through rotating shaft and the second cable-through rotating shaft; and
the first cable-through rotating shaft comprises a first lock ear, the first lock ear is connected to the first connection portion (110), the second cable-through rotating shaft comprises a second lock ear, and the second lock ear is connected to the second connection portion (120).

2. The hinge assembly (100) according to claim 1, wherein the first connection portion (110) is provided with a power receiving coil (111), the power receiving coil (111) is electrically connected to the first connection line (112), and the power receiving coil (111) is configured to couple to the first electronic device to generate a current; and
the second connection portion (120) is provided with a first electrical connection piece (121), the first electrical connection piece (121) is electrically connected to the second connection line (122), and the first electrical connection piece (121) is configured to electrically connect to the second electronic device.

3. The hinge assembly (100) according to claim 2, wherein a first cable-through channel is disposed in the first cable-through rotating shaft, a second cable-through channel is disposed in the second cable-through rotating shaft, and the first cable-through channel is conducted with the second cable-through channel; and
the first connection line (112) passes through the first cable-through channel and the second cable-through channel, and is conducted with the second connection line (122); or
the second connection line (122) passes through the first cable-through channel and the second cable-through channel, and is conducted with the first connection line (112); or
the first connection line (112) and the second connection line (122) are connected inside the first cable-through channel or the second cable-through channel.

4. The hinge assembly (100) according to claim 3, wherein a first cable-through port is disposed in a circumferential direction of the first cable-through rotating shaft, the first cable-through port communicates with the first cable-through channel, a second cable-through port is disposed in a circumferential direction of the second cable-through rotating shaft, and the second cable-through port communicates with the second cable-through channel.

5. The hinge assembly (100) according to claim 4, wherein the first cable-through port and the first lock ear are located on a same side of the first cable-through rotating shaft, and the second cable-through port and the second lock ear are located on a same side of the second cable-through rotating shaft.

6. The hinge assembly (100) according to claim 5, wherein a chamfer is disposed in a circumferential direction of the first cable-through port and a circumferential direction of the second cable-through port.

7. The hinge assembly (100) according to any one of claims 3 to 6, wherein the first cable-through channel is coaxial with the first cable-through rotating shaft, and the second cable-through channel is coaxial with the second cable-through rotating shaft.

8. The hinge assembly (100) according to any one of claims 3 to 6, wherein the first cable-through channel is coaxial with the second cable-through channel.

9. The hinge assembly (100) according to claim 2, wherein a conductive medium (139) is connected between the first shaft pin and the first pin hole, a third connection line is disposed on a shaft wall of the first cable-through rotating shaft, the third connection line is configured to be conducted between the first connection line (112) and the conductive medium (139), a fourth connection line is disposed on a shaft wall of the second cable-through rotating shaft, and the fourth connection line is configured to be conducted between the second connection line (122) and the conductive medium (139).

10. The hinge assembly (100) according to claim 9, wherein the third connection line is plated on the shaft wall of the first cable-through rotating shaft by using a laser direct structuring LDS process, and the fourth connection line is plated on the shaft wall of the second cable-through rotating shaft by using the LDS process.

11. The hinge assembly (100) according to claim 9 or 10, wherein a first pad is provided on the first lock ear, the third connection line is connected to the first connection line (112) at the first pad, a second pad is provided on the second lock ear, and the fourth connection line is connected to the second connection line (122) at the second pad.

12. The hinge assembly (100) according to any one of claims 1 to 6 or claim 9 or 10, wherein an axis of the first cable-through rotating shaft is located on a plane on which the first lock ear is located, and an axis of the second cable-through rotating shaft is located on a plane on which the second lock ear is located.

13. The hinge assembly (100) according to any one of claims 1 to 6 or claim 9 or 10, wherein the rotating shaft portion (130) further comprises a support rotating shaft (132), and an end portion of the support rotating shaft (132) is connected to an end portion of the first cable-through rotating shaft, or an end portion of the support rotating shaft (132) is connected to an end portion of the second cable-through rotating shaft.

14. The hinge assembly (100) according to claim 13, wherein a second shaft pin is disposed at the end portion of the support rotating shaft (132), a second pin hole is disposed at an end that is of the first cable-through rotating shaft and that is away from the second cable-through rotating shaft, and the second shaft pin extends into the second pin hole; or
a second pin hole is disposed at an end that is of the second cable-through rotating shaft and that is away from the first cable-through rotating shaft, and the second shaft pin extends into the second pin hole.

15. The hinge assembly (100) according to claim 14, wherein a second pin hole is disposed at the end portion of the support rotating shaft (132), a second shaft pin is disposed at an end that is of the first cable-through rotating shaft and that is away from the second cable-through rotating shaft, and the second shaft pin extends into the second pin hole; or
a second shaft pin is disposed at an end that is of the second cable-through rotating shaft and that is away from the first cable-through rotating shaft, and the second shaft pin extends into the second pin hole.

16. The hinge assembly (100) according to claim 13, wherein the support rotating shaft (132) is connected to a third lock ear, and the third lock ear is connected to the first connection portion (110) or the second connection portion (120).

17. The hinge assembly (100) according to any one of claims 1 to 6 or claim 9 or 10, wherein there are a plurality of first cable-through rotating shafts, and a quantity of second cable-through rotating shafts is the same as a quantity of first cable-through rotating shafts.

18. The hinge assembly (100) according to claim 13 or 14, wherein there are a plurality of support rotating shafts (132).

19. The hinge assembly (100) according to any one of claims 1 to 6, wherein the first cable-through rotating shaft and the second cable-through rotating shaft are made of one or more of the following materials: ferroalloy, zinc alloy, and aluminum alloy.

20. The hinge assembly (100) according to claim 9 or 10, wherein the first cable-through rotating shaft and the second cable-through rotating shaft are made of one or more of the following materials: a liquid crystal polymer, polycarbonate, polyamide fiber, and glass fiber.

21. An electronic device, comprising:
a keyboard, wherein the keyboard is provided with a second electrical connection piece (310); and
the hinge assembly (100) according to any one of claims 1 to 20, wherein the hinge assembly is electrically connected to the keyboard through the second electrical connection piece (310).
